# EUROPEAN PATENT APPLICATION

(11) **EP 4 477 405 A1**
(43) Date of publication of application: **18.12.2024**
(21) Application number: 23811367.4
(22) Date of filing: 10.02.2023
(51) Int. Cl.: B32B 3/10, B29B 11/16, B32B 5/00, B32B 5/24

(54) **RESIN-EQUIPPED FIBROUS BASE AND METHOD FOR PRODUCING MOLDED OBJECT**

(30) Priority: 24.05.2022 JP 2022084459
(71) Applicant: Nitto Boseki Co., Ltd., Fukushima-shi, Fukushima 960-8161 (JP)
(72) Inventor: FUJINO, Nobu, Itami-shi, Hyogo 664-8501 (JP)
(74) Representative: Vossius & Partner Patentanwälte Rechtsanwälte mbB
(86) International application number: PCT/JP2023/004557
(87) International publication number: WO 2023/228486

(57) **Abstract**

A resin-equipped fibrous base having a fibrous base, and dot-shaped resin parts provided on at least one surface of the fibrous base, in which the resin part contains a thermoplastic resin, a ratio A2/A1 of a mass A2 per unit area of the resin parts with respect to a mass A1 per unit area of the fibrous base is 0.005 to 0.105, and a ratio B2/B1 of an average diameter B2 of the resin parts with respect to an average constituent-unit width B1 of the fibrous base is 0.06 to 0.96.

## Description

### Technical Field

An aspect of the present invention relates to a resin-equipped fibrous base, a method for producing a molded object, and the like.

### Background Art

In recent years, in various fields such as automobiles and aircrafts, it has been studied to reduce the weight of bodies by using a resin material in place of a metal material, for improvement in fuel efficiency and the like. For example, as an alternative material for securing a sufficient strength, a fiber-reinforced material having a fibrous base has been attracting attention (see, for example, Patent Literature 1 below).

### Citation List

### Patent Literature

Patent Literature 1: International Publication WO 2018/150978

### Summary of Invention

### Technical Problem

The fiber-reinforced material can be used to obtain a molded object by various molding methods. For example, in manufacturing of automotive members and the like in which mass production is required with a short molding cycle, RTM (Resin transfer molding) may be used in some cases. There is a case where the fiber-reinforced material is cut when a molded object is obtained, and it is required to avoid occurrence of fiber fraying when the fiber-reinforced material is cut.

Furthermore, there is a case where a laminate is obtained by laminating a fiber-reinforced material. For such a fiber-reinforced material, sufficient adhesiveness is required from the viewpoint of maintaining the shape of the laminate, and the like.

Further, as the fiber-reinforced material, as in Patent Literature 1 described above, a resin-equipped fibrous base having a fibrous base and dot-shaped resin parts provided on at least one surface of the fibrous base may be used in some cases. When a resin molded object is obtained using such a resin-equipped fibrous base, it is required to suppress that a resin material (matrix resin) for obtaining a resin molded object is inhibited from permeating in a fiber-reinforced material (loss of the resin material (matrix resin)) when the resin material is brought into contact with a resin-equipped fibrous base.

An object of an aspect of the present invention is to provide a resin-equipped fibrous base which has sufficient adhesiveness and can suppress fiber fraying during cutting and in which a resin material loss is favorable when the resin material comes into contact. An object of another aspect of the present invention is to provide a method for producing a molded object using such a resin-equipped fibrous base.

### Solution to Problem

The present invention relates to the following [1] to [4], and the like in some aspects.
[1] A resin-equipped fibrous base having: a fibrous base; and dot-shaped resin parts provided on at least one surface of the fibrous base, in which the resin part contains a thermoplastic resin, a ratio A2/A1 of a mass A2 per unit area of the resin parts with respect to a mass A1 per unit area of the fibrous base is 0.005 to 0.105, and a ratio B2/B1 of an average diameter B2 of the resin parts with respect to an average constituent-unit width B1 of the fibrous base is 0.06 to 0.96.
[2] The resin-equipped fibrous base described in [1], in which the ratio A2/A1 is 0.016 to 0.062, and the ratio B2B1 is 0.20 to 0.50.
[3] The resin-equipped fibrous base described in [1] or [2], in which a melting point of the resin part is 55 to 95°C.
[4] A method for producing a molded object, the method including a step of heating and pressurizing the resin-equipped fibrous base described in any one of [1] to [3].

### Advantageous Effects of Invention

According to an aspect of the present invention, it is possible to provide a resin-equipped fibrous base which has sufficient adhesiveness and can suppress fiber fraying during cutting and in which a resin material loss is favorable when the resin material comes into contact. According to another aspect of the present invention, it is possible to provide a method for producing a molded object using such a resin-equipped fibrous base.

### Description of Embodiments

Hereinafter, embodiments of the present invention will be described, but the present invention is not limited to these embodiments at all.

In the present specification, a numerical range that has been indicated by use of "to" indicates the range that includes the numerical values which are described before and after "to", as the minimum value and the maximum value, respectively. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical range may be replaced with the value shown in Examples. "A or B" may include any one of A and B, and may also include both of A and B. Materials listed as examples in the present specification can be used singly or in combinations of two or more kinds thereof, unless otherwise specified. The term "step" includes not only an independent step but also a step by which an intended action of the step is achieved, though the step cannot be clearly distinguished from other steps. The term "unit area" in the resin-equipped fibrous base is a unit area of the resin-equipped fibrous base when viewed from a thickness direction of the fibrous base.

The resin-equipped fibrous base (fiber-reinforced material) of the present embodiment has a fibrous base and dot-shaped resin parts provided on at least one surface of the fibrous base, and the resin part contains a thermoplastic resin. In the resin-equipped fibrous base of the present embodiment, a ratio A2/A1 of a mass A2 per unit area of the resin parts with respect to a mass A1 per unit area of the fibrous base is 0.005 to 0.105, and a ratio B2/B1 of an average diameter B2 (dot diameter) of the resin parts with respect to an average constituent-unit width B1 of the fibrous base is 0.06 to 0.96.

The resin-equipped fibrous base of the present embodiment has sufficient adhesiveness. For example, according to the resin-equipped fibrous base of the present embodiment, in the evaluation described in Examples described below, it is possible to suppress the peeling of the entire base of a laminate.

According to the resin-equipped fibrous base of the present embodiment, fiber fraying during cutting can be suppressed. For example, according to the resin-equipped fibrous base of the present embodiment, in the evaluation described in Examples described below, less than 5% can be obtained as a ratio of a mass of fibers falling from the cutting surface with respect to a mass of the resin-equipped fibrous base before cutting.

According to the resin-equipped fibrous base of the present embodiment, a resin material loss is favorable when the resin material (matrix resin for obtaining a resin molded object) comes into contact. For example, according to the resin-equipped fibrous base of the present embodiment, in the evaluation described in Examples described below, 60% or more can be obtained as a ratio of a permeation amount M1 with respect to a permeation amount M2. The resin-equipped fibrous base of the present embodiment can be suitably used for producing various molded objects obtained using the resin material (for example, RTM molding).

An embodiment of the resin-equipped fibrous base of the present embodiment has sufficient flexibility. For example, according to such a resin-equipped fibrous base, in the evaluation described in Examples described below, flexibility that is acceptable compared to the feel of the fibrous base not provided with resin parts can be obtained.

The fibrous base supports the resin parts. The fibrous base may be a fiber woven fabric, may be an orthogonal fiber non-woven fabric, may be a multi-axial fiber non-woven fabric, and may be a fiber knitted material. The weave structure of the fiber woven fabric is not particularly limited. Examples of the weave structure of the fiber woven fabric include a plain weave structure, a twill weave structure, a satin weave structure, and a ribbed weave structure. The weave structure of the fiber woven fabric may be a plain weave structure or a twill weave structure from the viewpoint of easily suppressing fiber fraying, the viewpoint of easily making the resin material (matrix resin) loss favorable, the viewpoint of easily obtaining excellent adhesiveness, and the viewpoint of easily obtaining excellent flexibility. The weave structure of the fiber woven fabric may be a multiple weave structure such as a double weave structure (biaxial weave structure) or a triple weave structure. The weave structure of the fiber woven fabric may be a modified structure such as a mat weave structure or a rib weave structure. The weave structure of the fiber woven fabric may be a special structure such as a mock leno weave structure or a crepe weave structure. The weave structure of the fiber woven fabric may be any other weave structure.

The fibrous base is not limited to being constituted by one type of fiber. In the fiber woven fabric, warp yarns and weft yarns may be composed of different types of fiber yarns. In the fiber woven fabric, different types of fiber yarns may be contained in some of warp yarns or weft yarns. Thermoplastic resin fiber yarns composed of a thermoplastic resin may be contained in some of warp yarns or weft yarns of the fiber woven fabric. In the warp yarns or weft yarns constituting the fiber woven fabric, yarns composed of a resin different from a thermoplastic resin and thermoplastic resin fiber yarns may be mixed, doubled, or doubled and twisted.

The fibrous base may contain an inorganic fiber and may contain an organic fiber. Examples of the inorganic fiber include a glass fiber, a carbon fiber, a metal fiber, and a ceramic fiber. Examples of the organic fiber include an aramid fiber, a vinylon fiber, a polyethylene fiber, and a cellulose fiber. The fibrous base may contain glass fibers from the viewpoint of an excellent reinforcing effect of a molded object. The fibrous base may contain inorganic fibers as a main component, and may be an inorganic fibrous base substantially composed of inorganic fibers (for example, a glass fibrous base).

In a case where the fibrous base is a glass fibrous base, the glass composition of the glass fibers constituting the glass fibrous base is not particularly limited, but may be, for example, E-glass composition (composition including SiO₂ in a range of 52.0 to 56.0% by mass, Al₂O₃ in a range of 12.0 to 16.0% by mass, MgO and CaO in a range of 20.0 to 25.0% by mass in total, and B₂O₃ in a range of 5.0 to 10.0% by mass with respect to the total amount of the glass fibers), a high strength and high modulus glass composition (composition including SiO₂ in a range of 60.0 to 70.0% by mass, Al₂O₃ in a range of 20.0 to 30.0% by mass, MgO in a range of 5.0 to 15.0% by mass, Fe₂O₃ in a range of 0 to 1.5% by mass, and Na₂O, K₂O, and Li₂O in a range of 0 to 0.2% by mass in total with respect to the total amount of the glass fibers), a high modulus and easily-producible glass composition (composition including SiO₂ in a range of 57.0 to 60.0% by mass, Al₂O₃ in a range of 17.5 to 20.0% by mass, MgO in a range of 8.5 to 12.0% by mass, CaO in a range of 10.0 to 13.0% by mass, and B₂O₃ in a range of 0.5 to 1.5% by mass, and having a total amount of SiO₂, Al₂O₃, MgO, and CaO of 98.0% by mass or more with respect to the total amount of the glass fibers), or a low dielectric constant and low dielectric tangent glass composition (composition including SiO₂ in a range of 48.0 to 62.0% by mass, B₂O₃ in a range of 17.0 to 26.0% by mass, Al₂O₃ in a range of 9.0 to 18.0% by mass, CaO in a range of 0.1 to 9.0% by mass, MgO in a range of 0 to 6.0% by mass, Na₂O, K₂O, and Li₂O in a range of 0.05 to 0.5% by mass in total, TiO₂ in a range of 0 to 5.0% by mass, SrO in a range of 0 to 6.0% by mass, F₂ and Cl₂ in a range of 0 to 3.0% by mass in total, and P₂O₅ in a range of 0 to 6.0% by mass with respect to the total amount of the glass fibers).

A silane coupling agent may adhere to the surface of the fibrous base. Examples of the silane coupling agent include epoxy silane, amino silane, acryl silane, methacryl silane, and cationic silane. Examples of the epoxy silane include 3-glycidoxypropyltrimethoxysilane and 3-glycidoxypropyltriethoxysilane.

The mass A1 per unit area of the fibrous base may be 30 g/m² or more, 50 g/m² or more, 100 g/m² or more, 150 g/m² or more, 180 g/m² or more, 200 g/m² or more, 220 g/m² or more, 250 g/m² or more, 300 g/m² or more, 350 g/m² or more, 400 g/m² or more, 500 g/m² or more, or 600 g/m² or more, from the viewpoint of easily securing a sufficient strength. The mass A1 may be 1000 g/m² or less, 900 g/m² or less, 800 g/m² or less, 700 g/m² or less, 600 g/m² or less, 500 g/m² or less, 400 g/m² or less, 350 g/m² or less, 300 g/m² or less, 250 g/m² or less, or 220 g/m² or less, from the viewpoint of easily obtaining sufficient shapability. From these viewpoints, the mass A1 may be 30 to 1000 g/m², 150 to 800 g/m², 180 to 600 g/m², 200 to 500 g/m², or 200 to 400 g/m². The mass A1 tends to be equal before and after the resin parts are provided on the fibrous base.

As a method for measuring the mass A1 per unit area of the fibrous base, in a case where the fibrous base contains an inorganic fiber, the mass of the fibrous base after removing the resin parts attached to the fibrous base by heating (for example, heating at 625°C for 1 hour) can be measured. In a case where the fibrous base contains an organic fiber, the mass of the fibrous base after removing the resin parts by immersing the resin-equipped fibrous base in a solvent not dissolving the organic fiber but dissolving the resin parts can be measured. The mass A1 per unit area of the fibrous base can be measured by a known method. For example, in a case where the fibrous base is a glass fiber woven fabric, the mass A1 per unit area of the fibrous base can be measured in accordance with JIS R 3420:2013.

A content (content ratio) per unit area of the fibrous base may be in the following range on the basis of the total amount per unit area of the resin-equipped fibrous base, or the total mass (sum of the mass A1 and the mass A2) per unit area of the fibrous base and the resin parts. The content per unit area of the fibrous base may be more than 90.0% by mass, 90.5% by mass or more, 91.0% by mass or more, 92.0% by mass or more, 93.0% by mass or more, 94.0% by mass or more, or 95.0% by mass or more, from the viewpoint of easily securing a sufficient strength. The content per unit area of the fibrous base is less than 100.0% by mass, and may be 99.5% by mass or less, 99.0% by mass or less, 98.5% by mass or less, 98.0% by mass or less, 97.5% by mass or less, 97.0% by mass or less, 96.5% by mass or less, 96.0% by mass or less, 95.0% by mass or less, 94.0% by mass or less, or 93.0% by mass or less, from the viewpoint of easily obtaining sufficient shapability. From these viewpoints, the content per unit area of the fibrous base may be more than 90.0% by mass and less than 100.0% by mass, 90.5% by mass or more and less than 100.0% by mass, 90.5 to 99.5% by mass, 91.0 to 99.0% by mass, or 95.0 to 98.0% by mass.

The average constituent-unit width B1 of the fibrous base may be 150 µm or more, 300 µm or more, 350 µm or more, 500 µm or more, 550 µm or more, 600 µm or more, 700 µm or more, 750 µm or more, 800 µm or more, 900 µm or more, 1000 µm or more, 1100 µm or more, 1200 µm or more, 1300 µm or more, 1350 µm or more, 1500 µm or more, 2000 µm or more, 2500 µm or more, 3000 µm or more, or 3500 µm or more, from the viewpoint of easily securing a sufficient strength. The average constituent-unit width B1 may be 4500 µm or less, 4000 µm or less, 3500 µm or less, 3000 µm or less, 2500 µm or less, 2000 µm or less, 1500 µm or less, 1350 µm or less, 1300 µm or less, 1200 µm or less, 1100 µm or less, 1000 µm or less, 900 µm or less, 800 µm or less, 750 µm or less, or 700 µm or less, from the viewpoint of ease of handling. From these viewpoints, the average constituent-unit width B1 may be 150 to 4500 µm, 350 to 3500 µm, 500 to 1500 µm, 550 to 1350 µm, or 600 to 1300 µm. The average constituent-unit width B1 tends to be equal before and after the resin parts are provided on the fibrous base.

In a case where the fibrous base is a fiber woven fabric or an orthogonal fiber non-woven fabric, an average value of warp yarn widths and weft yarn widths can be used as the average constituent-unit width B1. In a case where the fibrous base is a multi-axial fiber non-woven fabric, an average value of yarn widths of yarns constituting each axis can be used as the average constituent-unit width B1. In a case where the fibrous base is a fiber knitted material, an average value of yarn widths of all types of knitted yarns included in the fiber knitted material can be used as the average constituent-unit width B1. For example, in a case where the fibrous base is a fiber woven fabric, the average constituent-unit width B1 can be obtained by selecting 10 warp yarns or weft yarns from the total width in the latitude or longitude direction of the fiber woven fabric such that the yarns are almost evenly spaced, selecting 10 places from the total length in each warp yarn or weft yarn such that the places are almost evenly spaced, measuring the yarn width with a ruler or a microscope (for example, manufactured by KEYENCE CORPORATION, trade name: VHX-2000, magnification: 200 times), obtaining average values of warp yarns or weft yams based on yarn widths at six places, excluding two places counting from the maximum value and two places counting from the minimum value among the obtained yarn widths, and calculating an average value of these values. Note that, here, the yarn width means the maximum width in a cross-section perpendicular to the longitudinal direction of the yarn, and does not include gaps between adjacent yarns.

In a case where the yarn as a structural unit of the fibrous base is a multifilament yarn, a filament diameter may be, for example, 1.0 to 35.0 µm, 3.0 to 30.0 µm, 3.5 to 20.0 µm, 5.0 to 10.0 µm, or 6.5 to 9.5 µm.

A fineness of the yarn as a structural unit of the fibrous base is not particularly limited as long as the mass A1 per unit area and the average constituent-unit width B1 can be achieved, but may be, for example, 1 to 1500 tex (g/1000 m), 1 to 1000 tex, 2 to 1000 tex, 5 to 800 tex, 10 to 700 tex, 20 to 500 tex, 30 to 300 tex, or 50 to 200 tex.

In a case where the fibrous base is a fiber woven fabric, a warp weaving density and a weft weaving density are not particularly limited as long as the mass A1 per unit area and the average constituent-unit width B1 can be achieved, but may be each independently 5 to 200 fibers/25 mm, 7 to 150 fibers/25 mm, 10 to 100 fibers/25 mm, or 15 to 50 fibers/25 mm. Furthermore, a ratio (weft weaving density/warp weaving density) of the weft weaving density with respect to the warp weaving density may be 0.5 to 2.0, 0.6 to 1.7, 0.8 to 1.3, or 0.9 to 1.1.

The resin parts containing a thermoplastic resin are provided in a dot shape on at least one surface of the fibrous base. The resin parts may adhere to only one surface of the fibrous base, and may adhere to both surfaces of the fibrous base. The resin parts may be thermoplastic resin parts substantially composed of a thermoplastic resin. The term "dot-shaped" usually means that a plurality of circular (approximately circular (including a perfect circle) or approximately elliptical) points are arranged regularly, but the shape or arrangement mode of each point is not particularly limited. For example, the shape of each point may be a quadrangular shape, a hexagonal shape, a star shape, or the like. Furthermore, each point may be arranged irregularly.

Examples of the thermoplastic resin include polyamide, polybutylene terephthalate, polyethylene terephthalate, polyphenylene sulfide, polycarbonate, polypropylene, a thermoplastic epoxy resin, polyethylene, polyvinyl chloride, polyphenylene ether, polyether ether ketone, polyaryl ether ketone, and a liquid crystal polymer (LCP).

The thermoplastic resin may contain a polyamide from the viewpoint of easily suppressing fiber fraying, the viewpoint of easily making the resin material (matrix resin) loss favorable, the viewpoint of easily obtaining excellent adhesiveness, and the viewpoint of easily obtaining excellent flexibility. From the same viewpoint, a content of polyamide may be 50% by mass or more, more than 50% by mass, 70% by mass or more, 90% by mass or more, 95% by mass or more, 98% by mass or more, 99% by mass or more, or substantially 100% by mass (an embodiment in which the resin parts are substantially composed of polyamide), on the basis of the total amount of the resin parts.

The melting point of the resin part, or the melting point of the thermoplastic resin may be 55°C or higher, 60°C or higher, 65°C or higher, 70°C or higher, 71°C or higher, 72°C or higher, 75°C or higher, 78°C or higher, 80°C or higher, 90°C or higher, 100°C or higher, 110°C or higher, or 120°C or higher, from the viewpoint of easily obtaining excellent processability. The melting point of the resin part, or the melting point of the thermoplastic resin may be 300°C or lower, 250°C or lower, 200°C or lower, 150°C or lower, 120°C or lower, 110°C or lower, 100°C or lower, 95°C or lower, 90°C or lower, 80°C or lower, 78°C or lower, or 75°C or lower, from the viewpoint of easily obtaining excellent adhesiveness. From these viewpoints, the melting point of the resin part, or the melting point of the thermoplastic resin may be 55 to 300°C, 55 to 150°C, 55 to 100°C, 55 to 95°C, 60 to 90°C, or 71 to 90°C. The melting point of the resin part and the melting point of the thermoplastic resin can be measured in accordance with JIS K 7121:2012.

The resin part may contain a component other than the thermoplastic resin. Examples of such a component include a thermosetting resin, a thickener, a surfactant, inorganic particles, a lubricant, and a pigment. Examples of the thermosetting resin include an epoxy resin and a urethane resin. Examples of the thickener include inorganic compounds such as water-soluble alkali silicate, montmorillonite, and colloidal alumina; cellulose derivative-based compounds such as methyl cellulose, hydroxyethyl cellulose, and carboxymethyl cellulose; polyether-based compounds such as pluronic polyether, polyether dialkyl ester, polyether dialkyl ether, a polyether urethane modified product, and a polyether epoxy modified product; polyacrylic acid-based compounds such as sodium polyacrylate and a polyacrylic acid-(meth)acrylic acid ester copolymer; polyvinyl-based compounds such as polyvinyl pyrrolidone, polyvinyl alcohol, and a polyvinyl benzyl alcohol copolymer; protein derivatives such as sodium caseinate and ammonium caseinate; and maleic anhydride copolymers such as partial esters of vinyl methyl ether-maleic anhydride copolymers and half esters of reactants of drying oil fatty acid allyl alcohol ester-maleic anhydride. Examples of the surfactant include carboxylates, sulfonates, sulfate ester salts, quaternary ammonium salts, amine salts, betaine type, polyhydric alcohol type, polyoxyethylene alkyl ether, polyoxyethylene alkyl phenyl ether, polyoxyethylene polyoxypropylene glycol, and polyethylene glycols. Examples of the inorganic particles include titanium oxide particles, zinc oxide particles, silicon dioxide particles, activated carbon particles, silver particles, and copper particles. Examples of the lubricant include paraffin wax, synthetic polyethylene, liquid paraffin, stearic acid, behenic acid, hydroxystearic acid, stearyl alcohol, stearic acid amide, oleic acid amide, erucamide, methylenebisstearamide, ethylenebisstearamide, glycerin monostearate, glycerin monooleate, butyl stearate, metallic soap, and fumed silica. Examples of the pigment include Alkali Blue, Lisol red, Carmine 6B, disazo Yellow, phthalocyanine blue, quinacridone red, isoindoline yellow, red clay, yellow clay, green clay, marachite, chalk, graphite, iron blue, zinc flower, cobalt blue, emerald green, viridian, titanium white, fluorescent pigments, metal powder pigments, pearl pigments, and thermo pigments.

The mass A2 per unit area of the resin parts may be 0.3 g/m² or more, 0.5 g/m² or more, 0.8 g/m² or more, 1.0 g/m² or more, 1.2 g/m² or more, 1.5 g/m² or more, 2.0 g/m² or more, 2.5 g/m² or more, 3.0 g/m² or more, 3.5 g/m² or more, 4.0 g/m² or more, 4.5 g/m² or more, 5.0 g/m² or more, 6.0 g/m² or more, 8.0 g/m² or more, 9.0 g/m² or more, 10.0 g/m² or more, 11.0 g/m² or more, 12.0 g/m² or more, 14.0 g/m² or more, 15.0 g/m² or more, 15.5 g/m² or more, 16.0 g/m² or more, 17.0 g/m² or more, 18.0 g/m² or more, 19.0 g/m² or more, 19.4 g/m² or more, or 20.0 g/m² or more, from the viewpoint of easily suppressing fiber fraying and the viewpoint of easily obtaining excellent adhesiveness. The mass A2 may be 30.0 g/m² or less, 27.0 g/m² or less, 25.0 g/m² or less, 22.0 g/m² or less, 20.0 g/m² or less, less than 20.0 g/m², 19.4 g/m² or less, 19.0 g/m² or less, 18.0 g/m² or less, 17.0 g/m² or less, 16.0 g/m² or less, 15.5 g/m² or less, 15.0 g/m² or less, 14.0 g/m² or less, 12.0 g/m² or less, 11.0 g/m² or less, 10.0 g/m² or less, 9.0 g/m² or less, 8.0 g/m² or less, 6.0 g/m² or less, 5.0 g/m² or less, 4.5 g/m² or less, 4.0 g/m² or less, 3.5 g/m² or less, 3.0 g/m² or less, 2.5 g/m² or less, 2.0 g/m² or less, less than 2.0 g/m², or 1.5 g/m² or less, from the viewpoint of easily making the resin material (matrix resin) loss favorable and the viewpoint of easily obtaining excellent flexibility. From these viewpoints, the mass A2 may be 0.3 to 30.0 g/m², 1.0 to 19.4 g/m², 3.5 to 15.5 g/m², 4.0 to 15.0 g/m², 5.0 to 15.0 g/m², 5.0 to 12.0 g/m², or 8.0 to 15.0 g/m². In a case where the resin parts are provided on both surfaces of the fibrous base, the mass A2 is the total mass of the resin parts on both surfaces.

The mass A2 per unit area of the resin parts can be measured by the following procedure. First, a 10 cm × 10 cm sample is cut from five places separated from each other in the resin-equipped fibrous base. Then, the mass of each sample thus obtained is measured. Then, each sample is immersed in a solvent having solubility with respect to the resin parts, and the mass after dissolving the resin parts is measured. The mass per unit area of each sample is calculated from a difference between two measured values thus obtained and the area of each sample, and an average value of the masses per unit area of three samples, excluding one sample having the maximum value and one sample having the minimum value, is taken as the mass A2 per unit area of the resin parts.

A content (content ratio) per unit area of the resin parts may be in the following range on the basis of the total amount per unit area of the resin-equipped fibrous base, or the total mass (sum of the mass A1 and the mass A2) per unit area of the fibrous base and the resin part. The content per unit area of the resin parts may be 9.5% by mass or less, 9.0% by mass or less, 8.0% by mass or less, 7.0% by mass or less, 6.0% by mass or less, or 5.0% by mass or less, from the viewpoint of easily making the resin material (matrix resin) loss favorable and the viewpoint of easily obtaining excellent flexibility. The content per unit area of the resin parts may be 0.5% by mass or more, 1.0% by mass or more, 1.5% by mass or more, 2.0% by mass or more, 2.5% by mass or more, 3.0% by mass or more, 3.5% by mass or more, 4.0% by mass or more, 5.0% by mass or more, 6.0% by mass or more, or 7.0% by mass or more, from the viewpoint of easily suppressing fiber fraying and the viewpoint of easily obtaining excellent adhesiveness. From these viewpoints, the content per unit area of the resin parts may be 0.5 to 9.5% by mass, 1.0 to 9.0% by mass, or 2.0 to 5.0% by mass.

The average diameter B2 of the resin parts may be 20 µm or more, 50 µm or more, 70 µm or more, 75 µm or more, 80 µm or more, 100 µm or more, 150 µm or more, 200 µm or more, 250 µm or more, 300 µm or more, 350 µm or more, 400 µm or more, 450 µm or more, 500 µm or more, 550 µm or more, 600 µm or more, 650 µm or more, 700 µm or more, 750 µm or more, more than 750 µm, or 800 µm or more, from the viewpoint of easily suppressing fiber fraying and the viewpoint of easily obtaining excellent adhesiveness. The average diameter B2 may be 2000 µm or less, 1500 µm or less, 1200 µm or less, 1000 µm or less, 800 µm or less, 700 µm or less, 650 µm or less, 600 µm or less, 550 µm or less, 500 µm or less, 450 µm or less, 400 µm or less, 350 µm or less, 300 µm or less, 250 µm or less, 200 µm or less, 150 µm or less, less than 150 µm, or 100 µm or less, from the viewpoint of easily making the resin material (matrix resin) loss favorable and the viewpoint of easily obtaining excellent flexibility. From these viewpoints, the average diameter B2 may be 20 to 2000 µm, 75 to 1200 µm, 100 to 650 µm, 150 to 550 µm, 150 to 450 µm, or 200 to 500 µm.

The average diameter B2 of the resin parts can be obtained by observing the resin parts in the resin-equipped fibrous base using a microscope and measuring the diameters of the resin parts. The diameters of 20 resin parts are measured while changing measurement points so that the measurement points are almost evenly distributed in the resin-equipped fibrous base, and an average value of 10 measured values, excluding five measured values counting from the maximum value and five measured values counting from the minimum value, can be obtained as the average diameter B2 of the resin parts. In a case where the shape of the resin part is not a perfect circle, the area of the resin part is measured using area calculation software or the like built in a microscope, and the diameter of the perfect circle having this area can be obtained as the diameter of the resin part.

A coverage ratio of the resin parts in the resin-equipped fibrous base is less than 100.0%, and may be 50.0% or less, less than 50.0%, 45.0% or less, 40.0% or less, 35.0% or less, 30.0% or less, less than 30.0%, 29.4% or less, 28.0% or less, 25.0% or less, 20.0% or less, 15.0% or less, 10.0% or less, 5.0% or less, 3.0% or less, or 2.0% or less, from the viewpoint of easily making the resin material (matrix resin) loss favorable and the viewpoint of easily obtaining excellent flexibility. The coverage ratio of the resin parts may be 0.1% or more, 0.5% or more, 1.0% or more, 2.0% or more, 3.0% or more, 5.0% or more, 10.0% or more, 15.0% or more, 20.0% or more, 25.0% or more, 28.0% or more, 29.4% or more, 30.0% or more, or 35.0% or more, from the viewpoint of easily suppressing fiber fraying and the viewpoint of easily obtaining excellent adhesiveness. From these viewpoints, the coverage ratio of the resin parts may be 0.1% or more and less than 100.0%, 0.1 to 50.0%, 0.1 to 45.0%, 0.5 to 35.0%, 0.5% or more and less than 30.0%, 1.0 to 29.4%, or 2.0 to 20.0%. The coverage ratio of the resin parts is a ratio of the area of a part where the resin parts are present on the surface of the resin-equipped fibrous base (part covered with the resin parts on the surface of the resin-equipped fibrous base). The coverage ratio of the resin parts can be obtained by formula "(S2/S1) × 100" while the surface of the resin-equipped fibrous base is observed using a microscope, and an area S1 of the entire surface of the resin-equipped fibrous base (area occupied by the fibers, not including the area of gap portions between the fibers), and an area S2 of a part where the resin parts are present on the surface of the resin-equipped fibrous base are obtained. In a case where the resin parts are provided on both surfaces of the fibrous base, the coverage ratio of the resin parts is an average value of the coverage ratios on one surface and the other surface.

The total mass (sum of the mass A1 and the mass A2) per unit area of the fibrous base and the resin parts may be in the following range. The total mass may be 30 g/m² or more, 50 g/m² or more, 100 g/m² or more, 150 g/m² or more, 180 g/m² or more, 200 g/m² or more, 220 g/m² or more, 250 g/m² or more, 300 g/m² or more, 350 g/m² or more, 400 g/m² or more, 500 g/m² or more, or 600 g/m² or more, from the viewpoint of easily securing a sufficient strength. The total mass may be 1000 g/m² or less, 900 g/m² or less, 800 g/m² or less, 700 g/m² or less, 600 g/m² or less, 500 g/m² or less, 400 g/m² or less, 350 g/m² or less, 300 g/m² or less, 250 g/m² or less, or 220 g/m² or less, from the viewpoint of easily obtaining sufficient shapability. From these viewpoints, the total mass may be 30 to 1000 g/m², 150 to 800 g/m², 180 to 600 g/m², 200 to 500 g/m², or 200 to 400 g/m².

The ratio A2/A1 of a mass A2 per unit area of the resin parts with respect to a mass A1 per unit area of the fibrous base is 0.005 to 0.105. When the ratio A2/A1 is 0.005 or more, fiber fraying during cutting can be suppressed, and sufficient adhesiveness can be obtained. Causes of obtaining such effects are presumed that, when the ratio A2/A1 is 0.005 or more, sufficient resin adheres to the fibrous base. When the ratio A2/A1 is 0.105 or less, it is possible to make a resin material loss favorable when the resin material (matrix resin) comes into contact. Causes of obtaining such effects are presumed that, when the ratio A2/A1 is 0.105 or less, excess resin that inhibits the passage through the fibrous base does not adhere to the fibrous base. However, causes of obtaining each of the above-described effects are not limited to each of the above-described contents.

The ratio A2/A1 may be 0.006 or more, 0.007 or more, 0.010 or more, 0.015 or more, 0.016 or more, 0.020 or more, 0.021 or more, 0.025 or more, 0.030 or more, 0.035 or more, 0.040 or more, 0.048 or more, 0.050 or more, 0.060 or more, 0.062 or more, 0.063 or more, 0.070 or more, 0.075 or more, or 0.077 or more, from the viewpoint of easily suppressing fiber fraying and the viewpoint of easily obtaining excellent adhesiveness. The ratio A2/A1 may be 0.100 or less, 0.080 or less, 0.077 or less, 0.075 or less, 0.070 or less, 0.063 or less, 0.062 or less, 0.060 or less, 0.050 or less, 0.049 or less, 0.048 or less, 0.040 or less, 0.035 or less, 0.030 or less, 0.025 or less, 0.021 or less, 0.020 or less, 0.016 or less, 0.015 or less, 0.010 or less, or 0.007 or less, from the viewpoint of easily making the resin material (matrix resin) loss favorable and the viewpoint of easily obtaining excellent flexibility. From these viewpoints, the ratio A2/A1 may be 0.006 to 0.080, 0.016 to 0.063, 0.016 to 0.062, 0.020 to 0.050, 0.030 to 0.050, 0.040 to 0.050, 0.021 to 0.049, or 0.020 to 0.040.

The ratio B2/B1 of the average diameter B2 of the resin parts with respect to the average constituent-unit width B1 of the fibrous base is 0.06 to 0.96. When the ratio B2/B1 is 0.06 or more, fiber fraying during cutting can be suppressed, and sufficient adhesiveness can be obtained. Causes of obtaining such effects are presumed that, when the ratio B2/B1 is 0.06 or more, the resin parts are moderately dispersed in and attached to the fibrous base, and the fiber can be sufficiently fixed. When the ratio B2/B1 is 0.96 or less, it is possible to make a resin material loss favorable when the resin material (matrix resin) comes into contact, and excellent flexibility is easily obtained. Causes of obtaining such effects are presumed that, when the ratio B2B 1 is 0.96 or less, gaps between yarns constituting the fibrous base, edge parts of the yarns, and the like are less likely to be excessively covered with the resin parts, and the resin material (matrix resin) is less likely to be prevented from passing through the gaps. However, causes of obtaining each of the above-described effects are not limited to each of the above-described contents.

The ratio B2/B1 may be 0.08 or more, 0.10 or more, 0.15 or more, 0.19 or more, 0.20 or more, 0.22 or more, 0.24 or more, 0.25 or more, 0.30 or more, 0.33 or more, 0.35 or more, 0.38 or more, 0.40 or more, 0.45 or more, 0.50 or more, 0.60 or more, 0.65 or more, or 0.67 or more, from the viewpoint of easily suppressing fiber fraying and the viewpoint of easily obtaining excellent adhesiveness. The ratio B2B 1 may be 0.95 or less, 0.90 or less, 0.80 or less, 0.70 or less, 0.67 or less, 0.65 or less, 0.60 or less, 0.50 or less, 0.49 or less, 0.45 or less, 0.40 or less, 0.38 or less, 0.35 or less, 0.33 or less, 0.30 or less, 0.25 or less, 0.24 or less, 0.22 or less, 0.20 or less, 0.19 or less, 0.15 or less, 0.10 or less, or 0.08 or less, from the viewpoint of easily making the resin material (matrix resin) loss favorable and the viewpoint of easily obtaining excellent flexibility. From these viewpoints, the ratio B2/B1 may be 0.06 to 0.90, 0.06 to 0.70, 0.15 to 0.60, 0.19 to 0.50, 0.20 to 0.50, 0.20 to 0.49, 0.22 to 0.45, 0.24 to 0.38, 0.26 to 0.38, or 0.30 to 0.50.

The numerical range of the ratio A2/A1 and the numerical range of the ratio B2/B1 can be arbitrarily combined. For example, the resin-equipped fibrous base of the present embodiment may be an embodiment in which the ratio A2/A1 is 0.016 to 0.062 and the ratio B2B1 is 0.20 to 0.50.

In a method for producing a molded object of the present embodiment, a molded object can be obtained using the resin-equipped fibrous base of the present embodiment. In the method for producing a molded object of the present embodiment, a molded object may be obtained using a laminate having the resin-equipped fibrous base of the present embodiment. The laminate may be a laminate obtained by laminating a plurality of the resin-equipped fibrous bases of the present embodiment, and may be a laminate obtained by laminating the resin-equipped fibrous base of the present embodiment (one or more resin-equipped fibrous bases) and other base. Examples of such other base include a metal foil (such as an aluminum foil), a thermoplastic resin sheet (such as a vinyl chloride resin sheet), a mineral wool sheet (such as a glass wool sheet), an inorganic board (such as a gypsum board and a ceramic board), and a paper (such as incombustible paper and a honeycomb board).

The method for producing a molded object of the present embodiment may include a molding step of obtaining a molded object by various molding methods using the resin-equipped fibrous base of the present embodiment (which may be the resin-equipped fibrous base in the laminate described above). For example, in the molding step, a molded object may be obtained by RTM molding using the resin-equipped fibrous base of the present embodiment. In the molding step, a molded object may be obtained by bringing a resin material (matrix resin) into contact with the resin-equipped fibrous base of the present embodiment, and a molded object may be obtained by permeating a resin material (matrix resin) in the resin-equipped fibrous base of the present embodiment. In the molding step, a resin material (matrix resin) may be brought into contact with (for example, permeated in) the resin-equipped fibrous base in a molding die. Examples of the resin material (matrix resin) include an epoxy resin, a phenolic resin, an acrylic resin, a polyamide, a polyolefin, a polyester (for example, an unsaturated polyester resin), polyurethane, polyvinylidene chloride, and polyvinyl chloride.

In the method for producing a molded object of the present embodiment, a molded object may be obtained through a plurality of steps, and the following step may be included before the molding step. The method for producing a molded object of the present embodiment may include a step of laminating a plurality of the resin-equipped fibrous bases of the present embodiment to obtain a laminate, and may include a step of laminating the resin-equipped fibrous base of the present embodiment (one or more resin-equipped fibrous bases) and other base to obtain a laminate. The method for producing a molded object of the present embodiment may include a step of cutting the resin-equipped fibrous base of the present embodiment (which may be the resin-equipped fibrous base in the laminate described above). The method for producing a molded object of the present embodiment may include a step of heating and pressurizing the resin-equipped fibrous base of the present embodiment (which may be the resin-equipped fibrous base in the laminate described above).

A molded object of the present embodiment is a molded object obtained by the method for producing a molded object of the present embodiment. The shape of the molded obj ect is not particularly limited. The molded object of the present embodiment may have the resin-equipped fibrous base of the present embodiment, and may have a base obtained by melting the resin parts in the resin-equipped fibrous base of the present embodiment. The molded object of the present embodiment can be used, for example, as various components of automobiles, aircrafts, transportation equipment, machines, structures, and the like.

### Examples

Hereinafter, the present invention will be more specifically described with reference to Examples and Comparative Examples, but the present invention is not limited to the following Examples.

### <Production of resin-equipped fibrous base>

### (Example 1)

First, glass fiber yarns (E-glass composition, glass filament diameter: 9.0 µm, fineness: 135 tex) were used as warp yarns and weft yarns and woven at a weaving density of warp yarns: 19 yarns/25 mm and weft yams: 18 yarns/25 mm to obtain a woven fabric (weave structure: plain weave). Next, this woven fabric was subjected to a heat cleaning treatment and a fiber opening treatment with a vibrowasher, and then surface-treated with 3-glycidoxypropyltrimethoxysilane (one kind of epoxy silane) to obtain a glass fiber woven fabric (fibrous base). The mass A1 per unit area of the glass fiber woven fabric (mass as measured in accordance with JIS R 3420:2013; the same applies hereinafter) was 209 g/m², and the average constituent-unit width B1 of the glass fiber woven fabric (average value of warp yarn widths and weft yarn widths as measured by the above-described method; the same applies hereinafter) was 1200 µm.

Next, a polyamide (manufactured by EMS-CHEMIE HOLDING AG, trade name: D1666AP1, melting point as measured in accordance with JIS K 7121:2012: 75°C) was attached to the surface of the above-described glass fiber woven fabric. Specifically, dot-shaped resin parts (circular shape, average diameter B2: 400 µm, 40 resin parts per inch (2.54 cm) square) were uniformly provided using a screen having a dot-shaped opening, and then the resin parts were fixed by heating. Subsequently, cooling was performed to normal temperature to obtain a resin-equipped fibrous base having the dot-shaped resin parts provided on one surface of the glass fiber woven fabric. In the resin-equipped fibrous base, the coverage ratio of the resin parts was 29.4%. The mass A2 per unit area of the resin parts was 10.0 g/m². The ratio A2/A1 of the mass A2 per unit area of the resin parts with respect to the mass A1 per unit area of the glass fiber woven fabric was 0.048. The ratio B2/B1 of the average diameter B2 of the resin parts with respect to the average constituent-unit width B1 of the glass fiber woven fabric was 0.33. The average diameter B2 and the coverage ratio of the resin parts were measured using a microscope (manufactured by KEYENCE CORPORATION, trade name: VHS-8000) (the same applies hereinafter).

### (Example 2)

First, glass fiber yarns (E-glass composition, glass filament diameter: 9.0 µm, fineness: 135 tex) were used as warp yarns and weft yarns and woven at a weaving density of warp yarns: 19 yarns/25 mm and weft yams: 18 yarns/25 mm to obtain a woven fabric (weave structure: plain weave). Next, this woven fabric was subjected to a heat cleaning treatment and then surface-treated with 3-glycidoxypropyltrimethoxysilane (one kind of epoxy silane) to obtain a glass fiber woven fabric (fibrous base). The mass A1 per unit area of the glass fiber woven fabric was 209 g/m², and the average constituent-unit width B1 of the glass fiber woven fabric was 700 µm.

Next, the same type of polyamide as in Example 1 was attached to the surface of the above-described glass fiber woven fabric. Specifically, dot-shaped resin parts (circular shape, average diameter B2: 200 µm, 30 resin parts per inch square) were uniformly provided using a screen having a dot-shaped opening, and then the resin parts were fixed by heating. Subsequently, cooling was performed to normal temperature to obtain a resin-equipped fibrous base having the dot-shaped resin parts provided on one surface of the glass fiber woven fabric. In the resin-equipped fibrous base, the coverage ratio of the resin parts was 4.4%. The mass A2 per unit area of the resin parts was 5.0 g/m². The ratio A2/A1 of the mass A2 per unit area of the resin parts with respect to the mass A1 per unit area of the glass fiber woven fabric was 0.024. The ratio B2/B1 of the average diameter B2 of the resin parts with respect to the average constituent-unit width B1 of the glass fiber woven fabric was 0.29.

### (Example 3)

A glass fiber woven fabric (fibrous base) was obtained by the same procedure as in Example 1. Next, the same type of polyamide as in Example 1 was attached to the surface of this glass fiber woven fabric. Specifically, dot-shaped resin parts (circular shape, average diameter B2: 400 µm, 10 resin parts per inch square) were uniformly provided using a screen having a dot-shaped opening, and then the resin parts were fixed by heating. Subsequently, cooling was performed to normal temperature to obtain a resin-equipped fibrous base having the dot-shaped resin parts provided on one surface of the glass fiber woven fabric. In the resin-equipped fibrous base, the coverage ratio of the resin parts was 1.9%. The mass A2 per unit area of the resin parts was 1.5 g/m². The ratio A2/A1 of the mass A2 per unit area of the resin parts with respect to the mass A1 per unit area of the glass fiber woven fabric was 0.007. The ratio B2/B1 of the average diameter B2 of the resin parts with respect to the average constituent-unit width B1 of the glass fiber woven fabric was 0.33.

### (Example 4)

A glass fiber woven fabric (fibrous base) was obtained by the same procedure as in Example 1. Next, the same type of polyamide as in Example 1 was attached to the surface of this glass fiber woven fabric. Specifically, dot-shaped resin parts (circular shape, average diameter B2: 400 µm, 40 resin parts per inch square) were uniformly provided using a screen having a dot-shaped opening, and then the resin parts were fixed by heating. Subsequently, cooling was performed to normal temperature to obtain a resin-equipped fibrous base having the dot-shaped resin parts provided on one surface of the glass fiber woven fabric. In the resin-equipped fibrous base, the coverage ratio of the resin parts was 29.4%. The mass A2 per unit area of the resin parts was 16.0 g/m². The ratio A2/A1 of the mass A2 per unit area of the resin parts with respect to the mass A1 per unit area of the glass fiber woven fabric was 0.077. The ratio B2/B1 of the average diameter B2 of the resin parts with respect to the average constituent-unit width B1 of the glass fiber woven fabric was 0.33.

### (Example 5)

First, glass fiber yarns (E-glass composition, glass filament diameter: 9.0 µm, fineness: 100 tex) were used as warp yarns and weft yarns and woven at a weaving density of warp yarns: 30 yarns/25 mm and weft yams: 30 yarns/25 mm to obtain a woven fabric (weave structure: plain weave). Next, this woven fabric was subjected to a heat cleaning treatment and a fiber opening treatment with a vibrowasher, and then surface-treated with 3-glycidoxypropyltrimethoxysilane (one kind of epoxy silane) to obtain a glass fiber woven fabric (fibrous base). The mass A1 per unit area of the glass fiber woven fabric was 335 g/m², and the average constituent-unit width B1 of the glass fiber woven fabric was 750 µm.

Next, the same type of polyamide as in Example 1 was attached to the surface of the above-described glass fiber woven fabric. Specifically, dot-shaped resin parts (circular shape, average diameter B2: 500 µm, 30 resin parts per inch square) were uniformly provided using a screen having a dot-shaped opening, and then the resin parts were fixed by heating. Subsequently, cooling was performed to normal temperature to obtain a resin-equipped fibrous base having the dot-shaped resin parts provided on one surface of the glass fiber woven fabric. In the resin-equipped fibrous base, the coverage ratio of the resin parts was 27.0%. The mass A2 per unit area of the resin parts was 15.0 g/m². The ratio A2/A1 of the mass A2 per unit area of the resin parts with respect to the mass A1 per unit area of the glass fiber woven fabric was 0.045. The ratio B2/B1 of the average diameter B2 of the resin parts with respect to the average constituent-unit width B1 of the glass fiber woven fabric was 0.67.

### (Example 6)

A glass fiber woven fabric (fibrous base) was obtained by the same procedure as in Example 1. Next, the same type of polyamide as in Example 1 was attached to the surface of this glass fiber woven fabric. Specifically, dot-shaped resin parts (circular shape, average diameter B2: 800 µm, 20 resin parts per inch square) were uniformly provided using a screen having a dot-shaped opening, and then the resin parts were fixed by heating. Subsequently, cooling was performed to normal temperature to obtain a resin-equipped fibrous base having the dot-shaped resin parts provided on one surface of the glass fiber woven fabric. In the resin-equipped fibrous base, the coverage ratio of the resin parts was 29.4%. The mass A2 per unit area of the resin parts was 10.0 g/m². The ratio A2/A1 of the mass A2 per unit area of the resin parts with respect to the mass A1 per unit area of the glass fiber woven fabric was 0.048. The ratio B2/B1 of the average diameter B2 of the resin parts with respect to the average constituent-unit width B1 of the glass fiber woven fabric was 0.67.

### (Example 7)

A glass fiber woven fabric (fibrous base) was obtained by the same procedure as in Example 1. Next, the same type of polyamide as in Example 1 was attached to the surface of this glass fiber woven fabric. Specifically, dot-shaped resin parts (circular shape, average diameter B2: 100 µm, 50 resin parts per inch square) were uniformly provided using a screen having a dot-shaped opening, and then the resin parts were fixed by heating. Subsequently, cooling was performed to normal temperature to obtain a resin-equipped fibrous base having the dot-shaped resin parts provided on one surface of the glass fiber woven fabric. In the resin-equipped fibrous base, the coverage ratio of the resin parts was 3.0%. The mass A2 per unit area of the resin parts was 10.0 g/m². The ratio A2/A1 of the mass A2 per unit area of the resin parts with respect to the mass A1 per unit area of the glass fiber woven fabric was 0.048. The ratio B2/B1 of the average diameter B2 of the resin parts with respect to the average constituent-unit width B1 of the glass fiber woven fabric was 0.08.

### (Example 8)

First, glass fiber yarns (E-glass composition, glass filament diameter: 9.0 µm, fineness: 1100 tex) were used as warp yarns and weft yarns and woven at a weaving density of warp yams: 8 yarns/25 mm and weft yarns: 8 yarns/25 mm to obtain a woven fabric (weave structure: plain weave). Next, this woven fabric was subjected to a heat cleaning treatment and a fiber opening treatment with a vibrowasher, and then surface-treated with 3-glycidoxypropyltrimethoxysilane (one kind of epoxy silane) to obtain a glass fiber woven fabric (fibrous base). The mass A1 per unit area of the glass fiber woven fabric was 625 g/m², and the average constituent-unit width B1 of the glass fiber woven fabric was 3500 µm.

Next, the same type of polyamide as in Example 1 was attached to the surface of the above-described glass fiber woven fabric. Specifically, dot-shaped resin parts (circular shape, average diameter B2: 400 µm, 45 resin parts per inch square) were uniformly provided using a screen having a dot-shaped opening, and then the resin parts were fixed by heating. Subsequently, cooling was performed to normal temperature to obtain a resin-equipped fibrous base having the dot-shaped resin parts provided on one surface of the glass fiber woven fabric. In the resin-equipped fibrous base, the coverage ratio of the resin parts was 39.0%. The mass A2 per unit area of the resin parts was 20.0 g/m². The ratio A2/A1 of the mass A2 per unit area of the resin parts with respect to the mass A1 per unit area of the glass fiber woven fabric was 0.032. The ratio B2/B1 of the average diameter B2 of the resin parts with respect to the average constituent-unit width B1 of the glass fiber woven fabric was 0.11.

### (Example 9)

A resin-equipped fibrous base was obtained by the same procedure as in Example 1, except that the type of polyamide was changed to trade name "2APO77" (melting point as measured in accordance with JIS K 7121:2012: 120°C) manufactured by EMS-CHEMIE HOLDING AG. The ratio A2/A1 of the mass A2 per unit area of the resin parts with respect to the mass A1 per unit area of the glass fiber woven fabric was 0.048. The ratio B2/B1 of the average diameter B2 of the resin parts with respect to the average constituent-unit width B1 of the glass fiber woven fabric was 0.33.

### (Comparative Example 1)

A glass fiber woven fabric (fibrous base) was obtained by the same procedure as in Example 1. Next, the same type of polyamide as in Example 1 was attached to the surface of this glass fiber woven fabric. Specifically, dot-shaped resin parts (circular shape, average diameter B2: 400 µm, 5 resin parts per inch square) were uniformly provided using a screen having a dot-shaped opening, and then the resin parts were fixed by heating. Subsequently, cooling was performed to normal temperature to obtain a resin-equipped fibrous base having the dot-shaped resin parts provided on one surface of the glass fiber woven fabric. In the resin-equipped fibrous base, the coverage ratio of the resin parts was 0.5%. The mass A2 per unit area of the resin parts was 0.5 g/m². The ratio A2/A1 of the mass A2 per unit area of the resin parts with respect to the mass A1 per unit area of the glass fiber woven fabric was 0.002. The ratio B2/B1 of the average diameter B2 of the resin parts with respect to the average constituent-unit width B1 of the glass fiber woven fabric was 0.3 3.

### (Comparative Example 2)

A glass fiber woven fabric (fibrous base) was obtained by the same procedure as in Example 1. Next, the same type of polyamide as in Example 1 was attached to the surface of this glass fiber woven fabric. Specifically, dot-shaped resin parts (circular shape, average diameter B2: 400 µm, 50 resin parts per inch square) were uniformly provided using a screen having a dot-shaped opening, and then the resin parts were fixed by heating. Subsequently, cooling was performed to normal temperature to obtain a resin-equipped fibrous base having the dot-shaped resin parts provided on one surface of the glass fiber woven fabric. In the resin-equipped fibrous base, the coverage ratio of the resin parts was 50.0%. The mass A2 per unit area of the resin parts was 28.0 g/m². The ratio A2/A1 of the mass A2 per unit area of the resin parts with respect to the mass A1 per unit area of the glass fiber woven fabric was 0.134. The ratio B2/B1 of the average diameter B2 of the resin parts with respect to the average constituent-unit width B1 of the glass fiber woven fabric was 0.33.

### (Comparative Example 3)

A glass fiber woven fabric (fibrous base) was obtained by the same procedure as in Example 1. Next, the same type of polyamide as in Example 1 was attached to the surface of this glass fiber woven fabric. Specifically, dot-shaped resin parts (circular shape, average diameter B2: 1500 µm, 10 resin parts per inch square) were uniformly provided using a screen having a dot-shaped opening, and then the resin parts were fixed by heating. Subsequently, cooling was performed to normal temperature to obtain a resin-equipped fibrous base having the dot-shaped resin parts provided on one surface of the glass fiber woven fabric. In the resin-equipped fibrous base, the coverage ratio of the resin parts was 27.0%. The mass A2 per unit area of the resin parts was 18.0 g/m². The ratio A2/A1 of the mass A2 per unit area of the resin parts with respect to the mass A1 per unit area of the glass fiber woven fabric was 0.086. The ratio B2/B1 of the average diameter B2 of the resin parts with respect to the average constituent-unit width B1 of the glass fiber woven fabric was 1.25.

### (Comparative Example 4)

A glass fiber woven fabric (fibrous base) was obtained by the same procedure as in Example 1. Next, the same type of polyamide as in Example 1 was attached to the surface of this glass fiber woven fabric. Specifically, dot-shaped resin parts (circular shape, average diameter B2: 50 µm, 55 resin parts per inch square) were uniformly provided using a screen having a dot-shaped opening, and then the resin parts were fixed by heating. Subsequently, cooling was performed to normal temperature to obtain a resin-equipped fibrous base having the dot-shaped resin parts provided on one surface of the glass fiber woven fabric. In the resin-equipped fibrous base, the coverage ratio of the resin parts was 0.9%. The mass A2 per unit area of the resin parts was 5.0 g/m². The ratio A2/A1 of the mass A2 per unit area of the resin parts with respect to the mass A1 per unit area of the glass fiber woven fabric was 0.024. The ratio B2/B1 of the average diameter B2 of the resin parts with respect to the average constituent-unit width B1 of the glass fiber woven fabric was 0.04.

### <Evaluation>

The following evaluations were performed using the above-described resin-equipped fibrous bases. The results are shown in Table 1.

### (Fraying)

The above-described resin-equipped fibrous base having a size of 30 cm square or more was cut into 10 cm square, and fibers falling from the cutting surface during cutting were collected. The mass of the fibers was measured, and a ratio of the mass of the fibers falling from the cutting surface with respect to the mass of the resin-equipped fibrous base before cutting was calculated. A case where the ratio was 3% or less was evaluated as "A", a case where the ratio was more than 3% and less than 5% was evaluated as "B", and a case where the ratio was 5% or more was evaluated as "C".

### (Adhesiveness)

The above-described resin-equipped fibrous base was cut into 10 cm square to obtain base pieces. Ten base pieces were laminated to obtain a laminate A, and then this laminate A was sandwiched between two release films (manufactured by Panac Co., Ltd., trade name: SP PET7501BU) to obtain a laminate B. Subsequently, 1 g of a 30 cm square glass plate was placed on the laminate B and then heated at 100°C for 60 minutes. Then, after cooling was performed at normal temperature for 1 hour, the degree of adhesion between the base pieces was evaluated. A case where all of the bases were bonded together was evaluated as "A", a case where a part of the base was peeled was evaluated as "B", and a case where the entire base was peeled was evaluated as "C".

### (Matrix resin loss)

The above-described resin-equipped fibrous base was cut into 10 cm square to obtain base pieces. This base piece was immersed in 100 mL of a matrix resin (unsaturated polyester resin, manufactured by Showa Denko K.K., trade name: RIGOLAC 158BQTN-1) for 5 minutes and then pulled up, and the amount of change in mass of the resin-equipped fibrous base before and after immersion was obtained as the permeation amount M1 of the matrix resin with respect to the resin-equipped fibrous base. By the same procedure, the permeation amount M2 of the matrix resin was also obtained for the above-described glass fiber woven fabric (fibrous base) not provided with resin parts. The matrix resin loss was evaluated based on the ratio "(M1/M2) × 100" of the permeation amount M1 with respect to the permeation amount M2. A case where the ratio was 80% or more was evaluated as "A", a case where the ratio was 60% or more and less than 80% was evaluated as "B", and a case where the ratio was less than 60% was evaluated as "C".

### (Flexibility)

The feel of touching the above-described resin-equipped fibrous base was evaluated. The feel of touching at that time was compared with the feel of touching the above-described glass fiber woven fabric (fibrous base) not provided with resin parts. A case where the feel of touching was the same degree as in the glass fiber woven fabric was evaluated as "A", a case where the feel of touching was harder than that of the glass fiber woven fabric but was within an acceptable range was evaluated as "B", and a case where the feel of touching was harder than that of the glass fiber woven fabric and was not within an acceptable range was evaluated as "C".

**[Table 1]**

| | | Example | | | | | | | | | Comparative Example | | | |
|---|---|---|---|---|---|---|---|---|---|---|---|---|---|---|
| | | 1 | 2 | 3 | 4 | 5 | 6 | 7 | 8 | 9 | 1 | 2 | 3 | 4 |
| Glass fiber woven fabric | Mass A1 [g/m²] | 209 | 209 | 209 | 209 | 335 | 209 | 209 | 625 | 209 | 209 | 209 | 209 | 209 |
| | Average constituent-unit width B1 [µm] | 1200 | 700 | 1200 | 1200 | 750 | 1200 | 1200 | 3500 | 1200 | 1200 | 1200 | 1200 | 1200 |
| Resin part | Melting point [°C] of polyamide | 75 | 75 | 75 | 75 | 75 | 75 | 75 | 75 | 120 | 75 | 75 | 75 | 75 |
| | Mass A2 [g/m²] | 10.0 | 5.0 | 1.5 | 16.0 | 15.0 | 10.0 | 10.0 | 20.0 | 10.0 | 0.5 | 28.0 | 18.0 | 5.0 |
| | Average diameter B2 [µm] | 400 | 200 | 400 | 400 | 500 | 800 | 100 | 400 | 400 | 400 | 400 | 1500 | 50 |
| | Coverage ratio [%] | 29.4 | 4.4 | 1.9 | 29.4 | 27.0 | 29.4 | 3.0 | 39.0 | 29.4 | 0.5 | 50.0 | 27.0 | 0.9 |
| Ratio A2/A1 | | 0.048 | 0.024 | 0.007 | 0.077 | 0.045 | 0.048 | 0.048 | 0.032 | 0.048 | 0.002 | 0.134 | 0.086 | 0.024 |
| Ratio B2/B1 | | 0.33 | 0.29 | 0.33 | 0.33 | 0.67 | 0.67 | 0.08 | 0.11 | 0.33 | 0.33 | 0.33 | 1.25 | 0.04 |
| Evaluation | Fraying | A | A | B | A | A | A | B | B | A | C | A | A | C |
| | Adhesiveness | A | A | B | A | A | A | B | B | B | C | A | A | C |
| | Matrix resin loss | A | A | A | B | B | B | A | A | A | A | C | C | A |
| | Flexibility | A | A | A | B | B | B | A | A | A | A | A | C | A |

## Claims

1. A resin-equipped fibrous base comprising: a fibrous base; and dot-shaped resin parts provided on at least one surface of the fibrous base, wherein
the resin part contains a thermoplastic resin,
a ratio A2/A1 of a mass A2 per unit area of the resin parts with respect to a mass A1 per unit area of the fibrous base is 0.005 to 0.105, and
a ratio B2/B1 of an average diameter B2 of the resin parts with respect to an average constituent-unit width B1 of the fibrous base is 0.06 to 0.96.

2. The resin-equipped fibrous base according to claim 1, wherein the ratio A2/A1 is 0.016 to 0.062, and the ratio B2B1 is 0.20 to 0.50.

3. The resin-equipped fibrous base according to claim 1, wherein a melting point of the resin part is 55 to 95°C.

4. A method for producing a molded object, the method comprising a step of heating and pressurizing the resin-equipped fibrous base according to any one of claims 1 to 3.
